# EUROPEAN PATENT APPLICATION

(11) **EP 2 846 442 A2**
(43) Date of publication of application: **11.03.2015**
(21) Application number: 14182405.2
(22) Date of filing: 27.08.2014
(51) Int. Cl.: H02K 11/00, H02K 16/00, B60L 11/18, H02P 25/22

(54) **Motor driving apparatus and vehicle**

(30) Priority: 05.09.2013 JP 2013184441
(71) Applicant: Kabushiki Kaisha Yaskawa Denki, Kitakyushu-shi, Fukuoka 806-0004 (JP)
(72) Inventor: Nagao, Toshio, Kitakyushu-shi, Fukuoka 806-0004 (JP); Nagao, Mitsunori, Kitakyushu-shi, Fukuoka 806-0004 (JP); Ito, Tetsuya, Kitakyushu-shi, Fukuoka 806-0004 (JP)
(74) Representative: Viering, Jentschura & Partner Patent- und Rechtsanwälte

(57) **Abstract**

A motor driving apparatus (10, 10a) includes: a motor (3) including a first winding (3a) and a second winding (3a, 3b); a winding switcher (4) configured to switch between connection states of the first winding and the second winding of the motor; and a power converter (1) connected to the motor. The motor, the power converter, and the winding switcher are disposed in a direction approximately orthogonal to an axial direction of the motor in order of the motor, the power converter, and the winding switcher.

## Description

### BACKGROUND

### 1. Technical Field

The present disclosure relates to a motor driving apparatus and a vehicle.

### 2. Related Art

Conventionally, there is known a motor driving apparatus includes a motor including a first winding and a second winding (for example, refer to JP-A-2010-17055). The motor driving apparatus disclosed in JP-A-2010-17055 includes a motor, a winding switcher, and an inverter (power converter). The motor includes a first winding for high-speed driving and the second driving winding for low-speed driving. The winding switcher switches between connection states of the two windings of the motor.

In general, in such a conventional motor driving apparatus including a motor, a winding switcher, and a power converter as disclosed in JP-A 2010-17055, the winding switcher and the power converter are directly mounted on the side surfaces of the motor, respectively. In other words, the winding switcher and the power converter are individually mounted on different portions on the side surfaces of the motor.

However, in the conventional motor driving apparatus as described above, the winding switcher and the power converter are individually mounted on different portions on the side surfaces of the motor, respectively. Thus, after mounting of the winding switcher on the side surface of the motor, there is a need to rotate the motor around an axis thereof to direct upward a portion on the side surface of the motor on which the power converter is to be mounted. Therefore, there is a problem of poor workability in mounting of the winding switcher and the power converter.

The present disclosure is devised to solve the foregoing problem. One objective of the present disclosure is to provide a motor driving apparatus and a vehicle that can improve the workability in mounting the winding switcher and the power converter.

### SUMMARY

A motor driving apparatus includes: a motor including a first winding and a second winding; a winding switcher configured to switch between connection states of the first winding and the second winding of the motor; and a power converter connected to the motor. The motor, the power converter, and the winding switcher are disposed in a direction approximately orthogonal to an axial direction of the motor in order of the motor, the power converter, and the winding switcher.

### BRIEF DESCRIPTION OF DRAWINGS

Fig. 1 is a block diagram illustrating an entire configuration of a vehicle according to a first embodiment;
Fig. 2 is a side view of an entire configuration of a motor drive unit according to the first embodiment;
Fig. 3 is an exploded perspective view of the motor drive unit illustrated in Fig. 2;
Fig. 4 is an exploded perspective view of the motor drive unit illustrated in Fig. 3 viewed from the side opposite to the side in Fig. 3;
Fig. 5 is a perspective view of the motor drive unit illustrated in Fig. 2 viewed from obliquely below;
Fig. 6 is a perspective view of the motor drive unit illustrated in Fig. 5 viewed from the side opposite to that in Fig. 5;
Fig. 7 is a perspective view of the motor drive unit illustrated in Fig. 2 viewed obliquely from above;
Fig. 8 is a top view of an inverter housing portion in the motor drive unit according to the first embodiment;
Fig. 9 is a diagram illustrating the inverter housing portion illustrated in Fig. 8, in the state prior to mounting of the inverter and a controller;
Fig. 10 is a perspective view of an inverter bus-bar wiring in the motor drive unit according to the first embodiment;
Fig. 11 is a perspective view of the inverter bus-bar wiring illustrated in Fig. 10 viewed from the side opposite to that in Fig. 10;
Fig. 12 is a cross-section view of Fig. 6 taken along line 200-200;
Fig. 13 is an axial view of the motor drive unit illustrated in Fig. 2;
Fig. 14 is a top view of a second housing portion in the motor drive unit according to the first embodiment;
Fig. 15 is a diagram illustrating the second housing portion illustrated in Fig. 14, in the state prior to mounting of the winding switcher;
Fig. 16 is a perspective view of a low-speed winding bus-bar wiring in the motor drive unit according to the first embodiment;
Fig. 17 is a perspective view of the low-speed winding bus-bar wiring illustrated in Fig. 16 viewed from the side opposite to that in Fig. 16;
Fig. 18 is a cross-section view of Fig. 6 taken along line 300-300;
Fig. 19 is a side view of a first cooling flow passage in the motor drive unit according to the first embodiment;
Fig. 20 is a top view of the first cooling flow passage in the motor drive unit according to the first embodiment;
Fig. 21 is a bottom view of the first cooling flow passage in the motor drive unit according to the first embodiment;
Fig. 22 is a block diagram illustrating an entire configuration of a vehicle according to a second embodiment;
Fig. 23 is a cross-section view of a motor drive unit according to the second embodiment; and
Fig. 24 is a top view of a second housing portion in a motor drive unit according to a modification example of the first and second embodiments.

### DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

A motor driving apparatus according to a first aspect of the present disclosure includes: a motor including a first winding and a second winding; a winding switcher configured to switch between connection states of the first winding and the second winding of the motor; and a power converter connected to the motor. The motor, the power converter, and the winding switcher are disposed in a direction approximately orthogonal to an axial direction of the motor in order of the motor, the power converter, and the winding switcher.

In the motor driving apparatus according to the first aspect, the motor, the power converter, and the winding switcher are disposed in a direction approximately orthogonal to the axial direction of the motor in order of the motor, the power converter, and the winding switcher, as described above. In other words, the power converter and the winding switcher are disposed to overlap the motor (at positions orthogonal to the motor) viewed from a direction orthogonal to the axis of the motor (rotation axis) (in the direction in which the power converter and the winding switcher are disposed). Thus, the winding switcher and the power converter can be mounted to the motor without having to rotate the motor around the axis, facilitating the work of mounting the winding switcher and the power converter. As a result, an improvement can be made in workability in mounting the winding switcher and the power converter.

In addition, the motor driving apparatus according to the first aspect may further includes a first housing portion including a motor housing portion for housing the motor and a power converter housing portion for housing the power converter, and a second housing portion that is stacked on the first housing portion in the direction approximately orthogonal to the axial direction of the motor in the first housing portion and is configured to house the winding switcher. In this configuration, the first housing portion and the second housing portion may be disposed at positions adjacent to each other and may be integrally joined each other. Further, the second housing portion may overlap the first housing portion (at a position orthogonal to the first housing portion) viewed from the direction orthogonal to the axis of the motor (rotation axis) (in the direction in which the second housing portion is disposed).

A vehicle according to a second aspect of the present disclosure includes: a vehicle main body unit; and a motor drive unit that is provided within the vehicle main body unit. The motor drive unit includes: a motor including a first winding and a second winding; a winding switcher configured to switch between connection states of the first winding and the second winding of the motor; and a power converter connected to the motor, and the motor, the power converter, and the winding switcher are disposed in a direction approximately orthogonal to an axial direction of the motor, in order of the motor, the power converter, and the winding switcher.

In the vehicle according to the second aspect, the motor, the power converter, and the winding switcher are disposed in the direction approximately orthogonal to the axial direction of the motor in order of the motor, the power converter, and the winding switcher, as described above. The winding switcher and the power converter can be therefore mounted the motor without having to rotate the motor around the axis, facilitating the work of mounting the winding switcher and the power converter. As a result, the workability in mounting the winding switcher and the power converter can be improved.

The foregoing motor driving apparatus and vehicle can be provided with improved workability in mounting the winding switcher and the power converter.

Hereinafter, embodiments will be described with reference to the drawings.

### (First embodiment)

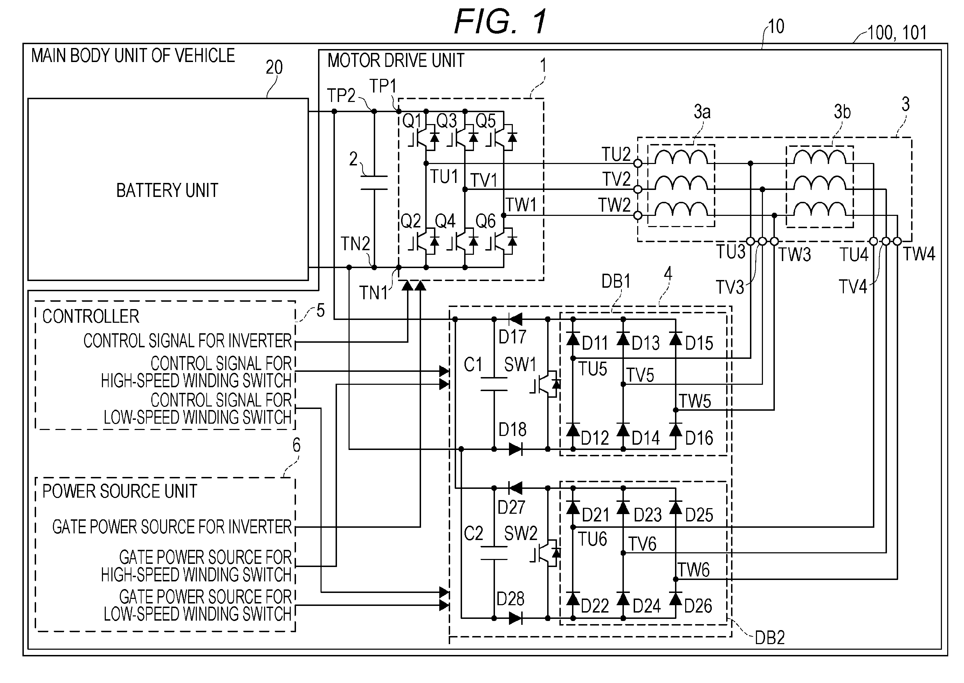

Referring to Fig. 1, a configuration of a vehicle 100 according to a first embodiment will be described. However, the configuration illustrated in Fig. 1 is an example of a "configuration of a vehicle including a winding switch-type motor drive unit."

As illustrated in Fig. 1, the vehicle 100 includes a vehicle main body unit 101, a motor drive unit 10 provided within the vehicle main body unit 101, and a battery unit 20 connected to the motor drive unit 10. The motor drive unit 10 is an example of a "motor driving apparatus."

The motor drive unit 10 is configured to include an inverter 1, a smoothing capacitor 2, a motor 3, a winding switcher 4, a controller 5, and a power source unit 6. The inverter 1 is an example of a "power converter."

The inverter 1 is configured to convert direct-current power input from the battery unit 20 into alternating power in three phases (U phase, V phase, and W phase), and output the same to the motor 3. The inverter 1 has direct-current input terminals TP1 and TN1 connected to the battery unit 20 and alternating-current output terminals TU1, TV1, and TW1 connected to the motor 3. Terminals TP2 and TN2 of the smoothing capacitor 2 are connected to the direct-current terminals TP1 and TN1 of the inverter 1, respectively. The smoothing capacitor 2 is provided to smooth out direct-current power input from the battery unit 20.

The inverter 1 is also configured to include six switch elements Q1, Q2, Q3, Q4, Q5, and Q6 for power conversion. The switch elements Q1 and Q2 are configured to perform power conversion in U phase. The switch elements Q3 and Q4 are configured to perform power conversion in V phase. The switch elements Q5 and Q6 are configured to perform power conversion in W phase. The switch elements Q1 to Q6 are formed by semiconductors including SiC, for example.

The motor 3 is configured to be driven in correspondence with alternating-current power of three phases supplied from the inverter 1. The motor 3 is configured to include a three-phase winding 3a for high-speed driving, and three-phase windings 3a and 3b for low-speed driving. The winding 3a is an example of a "first winding" and a "high-speed driving winding." The windings 3a and 3b are examples of a "second winding" and a "low-speed driving winding."

The windings 3a and 3b are connected electrically in series. Respective terminals TU2, TV2, and TW2 in the phases (U phase, V phase, and W phase) at one side of the winding 3a are connected to the inverter 1. Respective terminals TU3, TV3, and TW3 of phases at the other side of the winding 3a and one side of the winding 3b are connected to a diode bridge DB1 described later in the winding switcher 4. Respective terminals TU4, TV4, and TW4 at the other side of the winding 3b are connected to a diode bridge DB2 described later in the winding switcher 4.

The winding switcher 4 has the function of switching connection states between the windings 3a and 3b of the motor 3. Specifically, the winding switcher 4 is configured to include a high-speed winding switch SW1 and a low-speed winding switch SW2. The high-speed winding switch SW1 is a switch for short-circuiting the terminals TU3, TV3, and TW3 of the motor 3. The low-speed winding switch SW2 is a switch for short-circuiting the terminals TU4, TV4, and TW4 of the motor 3. The high-speed winding switch SW1 and the low-speed winding switch SW2 are formed by semiconductors including SiC, for example.

The winding switcher 4 is configured to include the diode bridge DB1 and a capacitor C1. The diode bridge DB1 has terminals TU5, TV5, and TW5 connected to the terminals TU3, TV3, and TW3 of the motor 3, respectively. The capacitor C1 protects the winding 3a of the motor 3. The high-speed winding switch SW1, the diode bridge DB1, the capacitor C1, and the smoothing capacitor 2 are connected electrically in parallel to each other.

The winding switcher 4 is also configured to include the diode bridge DB2 and a capacitor C2. The diode bridge DB2 has terminals TU6, TV6, and TW6 connected to the terminals TU4, TV4, and TW4 of the motor 3, respectively. The capacitor C2 protects the windings 3a and 3b of the motor 3. The low-speed winding switch SW2, the diode bridge DB2, the capacitor C2, and the smoothing capacitor 2 are connected electrically in parallel to each other.

The diode bridge DB1 includes six diodes D11, D12, D13, D14, D15, and D16. These diodes D11, D12, D13, D14, D15, and D16 rectify alternating currents in the three phases (U phase, V phase, and W phase) output from the terminals TU3, TV3, and TW3 of the motor 3. The diodes D11 and D12 are configured to rectify an alternating current in U phase. The diodes D13 and D14 are configured to rectify an alternating current in V phase. The diodes D15 and D16 are configured to rectify an alternating current in W phase. Two diodes D17 and D18 are provided on a direct-current output side of the diode bridge DB1.

Similarly, the diode bridge DB2 includes six diodes D21, D22, D23, D24, D25, and D26. These diodes D21, D22, D23, D24, D25, and D26 rectify alternating currents in the three phases (U phase, V phase, and W phase) output from the terminals TU4, TV4, and TW4 of the motor 3. The diodes D21 and D22 are configured to rectify an alternating current in U phase. The diodes D23 and D24 are configured to rectify an alternating current in V phase. The diodes D25 and D26 are configured to rectify an alternating current in W phase. Two diodes D27 and D28 are provided on a direct-current output side of the diode bridge DB2.

The controller 5 is configured to control the inverter 1 and the winding switcher 4 by outputting control signals (inverter control signal, control signal for high-speed winding switch, and control signal for low-speed winding switch) to the inverter 1 and the winding switcher 4. The power source unit 6 is configured to supply power source for operating the switch elements Q1 to Q6 of the inverter 1 (inverter gate power source) to the inverter 1. The power source unit 6 is also configured to supply a power source for operating the high-speed winding switch SW1 and the low-speed winding switch SW2 of the winding switcher 4 (a gate power source for high-speed winding switch and a gate power source for low-speed winding switch) to the winding switcher 4.

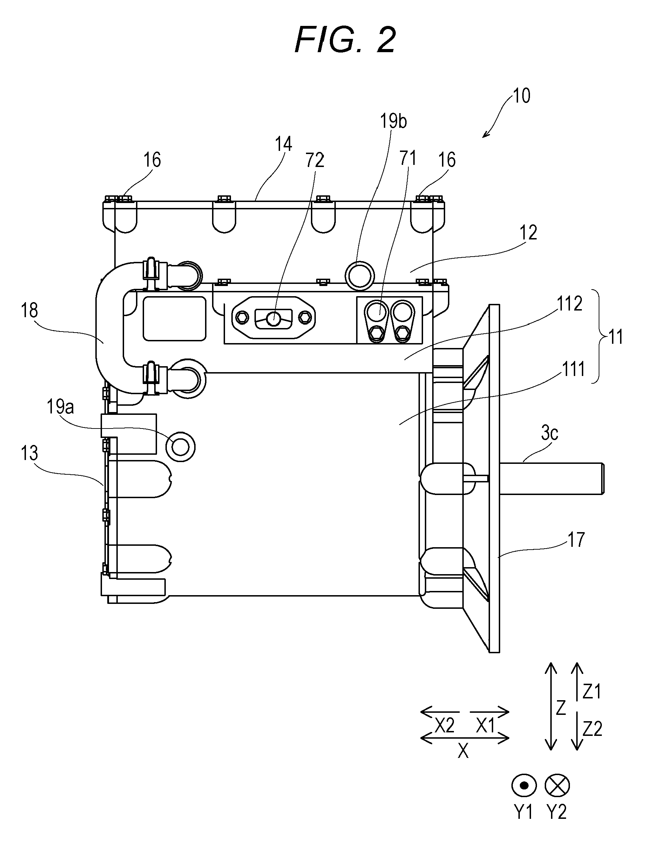

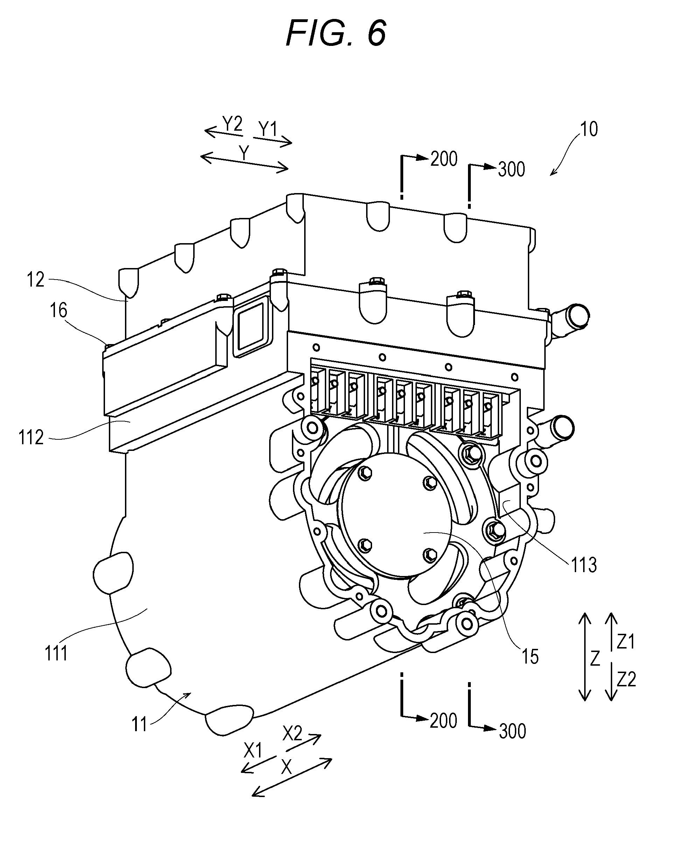

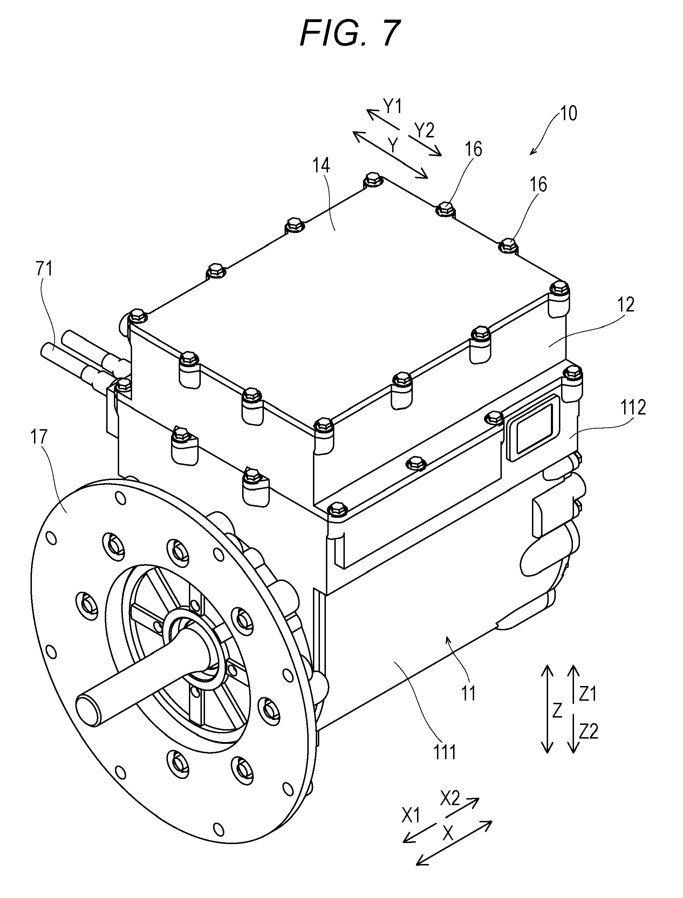

Next, referring to Figs. 2 to 21, a configuration of the motor drive unit 10 according to the first embodiment will be described.

As illustrated in Figs. 2 to 7, the motor drive unit 10 includes a first housing portion 11, a second housing portion 12, a first cover portion 13, and a second cover portion 14. The first housing portion 11 houses the motor 3 and the inverter 1. The second housing portion 12 houses the winding switcher 4. The first cover portion 13 covers a non-load side (X2-direction side) of the first housing portion 11. The second cover portion 14 covers an upper side of the second housing portion 12 (in a Z1 direction).

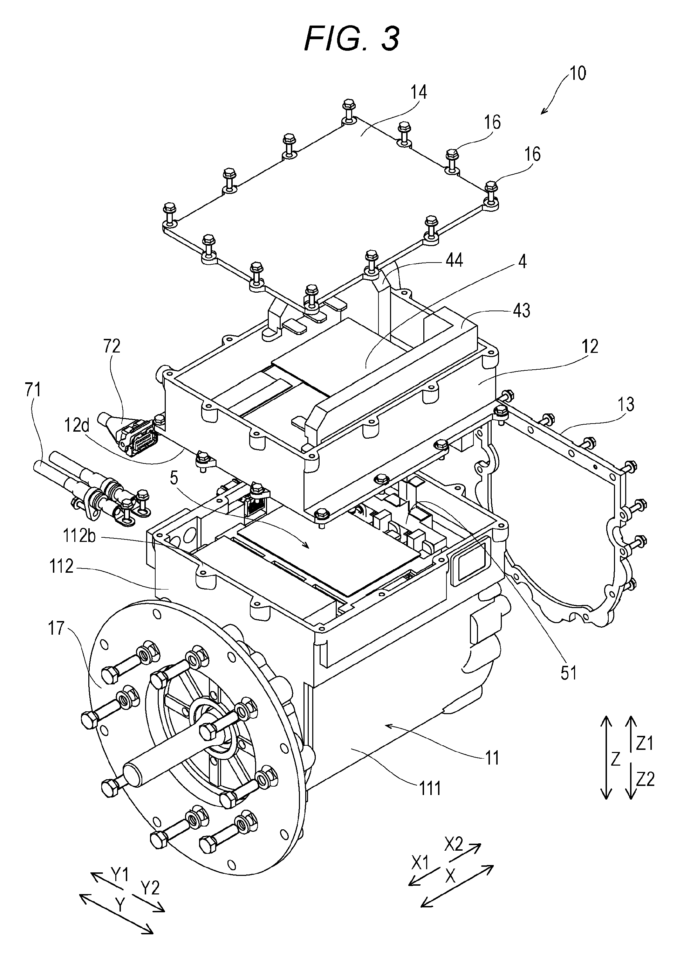

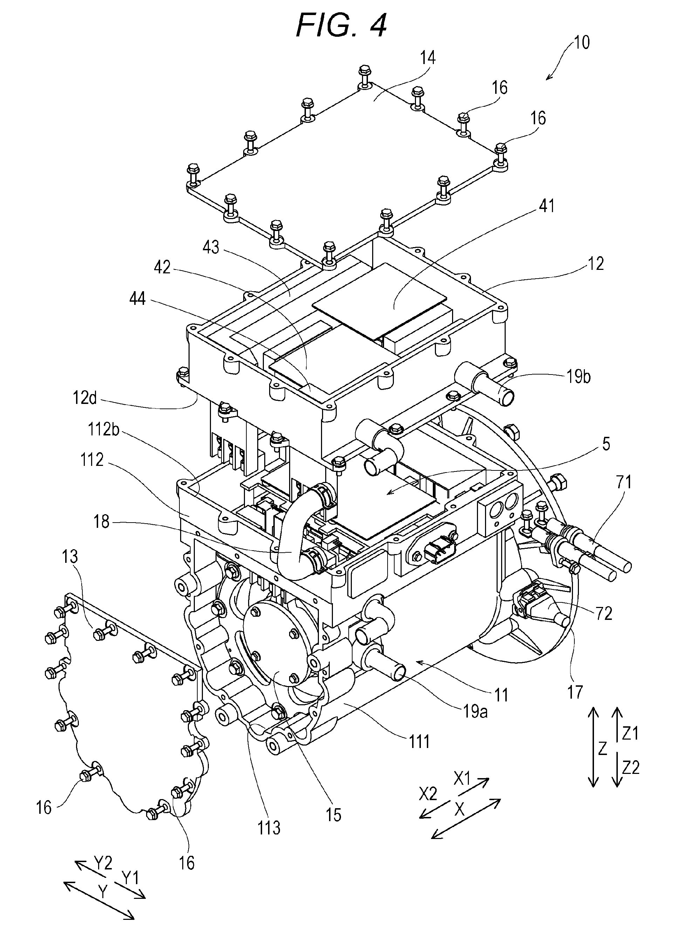

The first housing portion 11 includes a motor housing portion 111 for housing the motor 3 and an inverter housing portion 112. The inverter housing portion 112 is disposed on a side surface of the motor housing portion 111 (in the Z1 direction) to house the inverter 1. The motor housing portion 111 has an almost cylindrical shape. As illustrated in Fig. 4, the motor housing portion 111 is opened at the non-load side (X2-direction side) of the motor housing portion 111. Provided at the non-load side of the motor housing portion 111 is a resolver housing portion 113 at which a resolver 15 is disposed. The resolver housing portion 113 (at the non-load side (X2-direction side) of the motor housing portion 111) is configured such that the first cover portion 13 is attached thereto by screw members 16. As illustrated in Fig. 3, a flange 17 is attached to a load side (X1-direction side) of the motor housing portion 111. As illustrated in Fig. 2, the motor 3 has a shaft 3c configured to protrude from the flange 17 in the axial direction (X direction). The inverter housing portion 112 is an example of a "power converter housing portion." In addition, the motor housing portion 111 and the inverter housing portion 112 of the first housing portion 11 may be integrally formed. Alternatively, the motor housing portion 111 and the inverter housing portion 112 may be separately formed and then integrally joined together.

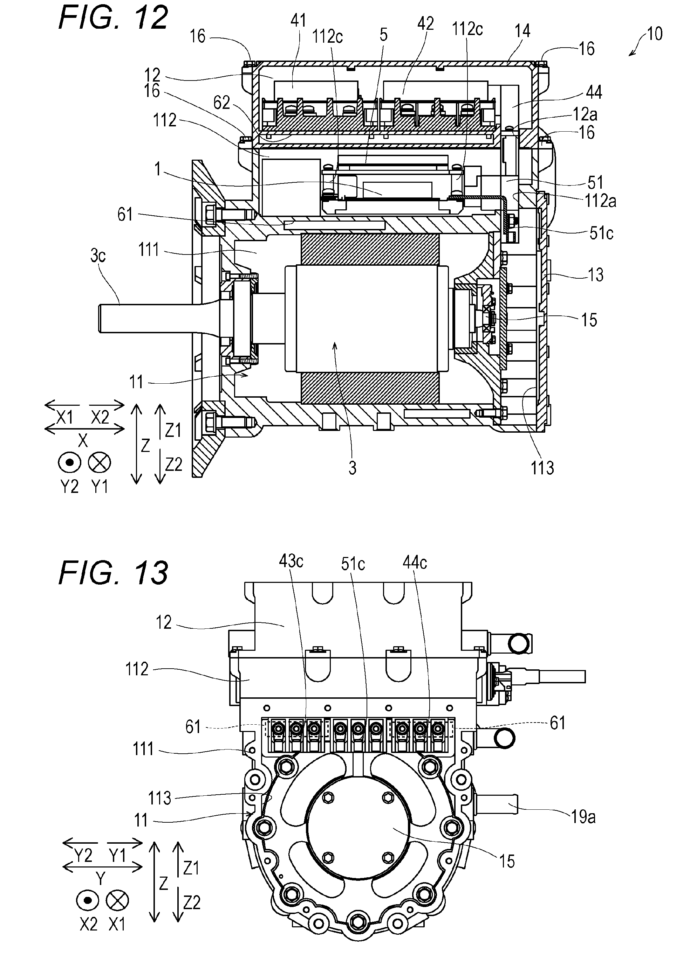

As illustrated in Figs. 3 and 4, the inverter housing portion 112 has a box shape opened at the upper side (in the Z1 direction). As illustrated in Fig. 12, the inverter 1 is disposed on a bottom surface of the inverter housing portion 112. In the first embodiment, the controller 5 configured to control the winding switcher 4 and the inverter 1 is disposed at the inverter housing portion 112. The controller 5 is disposed on the outer side than the inverter 1 in a direction approximately orthogonal (Z1 direction) to the axial direction of the inverter 1 (axial direction of the motor 3). Specifically, a plurality of column portions 112c is integrally provided at the inverter housing portion 112. The controller 5 is disposed at the upper side of the column portions 112c (upper side of the inverter 1) in the state of being supported by the column portions 112c.

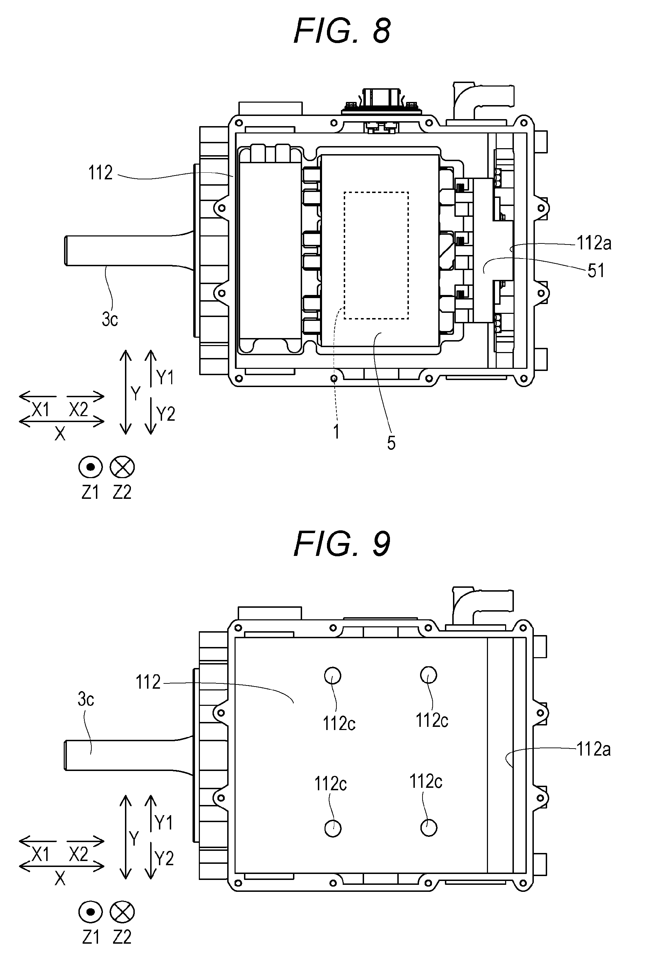

In the first embodiment, as illustrated in Fig. 8, an inverter bus-bar wiring 51 is provided to connect the inverter 1 and the motor 3. In addition, as illustrated in Fig. 9, the first housing portion 11 is provided with a first hole portion 112a that establishes a communication between the motor housing portion 111 and the inverter housing portion 112. The inverter bus-bar wiring 51 is configured to penetrate through the first hole portion 112a. A motor connector 51c (refer to Fig. 13) is disposed at the non-load side of the motor housing portion 111 (resolver housing portion 113) (refer to Fig. 13). The first hole portion 112a is formed in an almost rectangular shape to extend from an end at the Y1-direction side to an end at the Y2-direction side of the inverter housing portion 112 at the X2-direction side of the inverter housing portion 112 in plan view (viewed from the Z1 direction). The inverter bus-bar wiring 51 is an example of a "first bus-bar wiring."

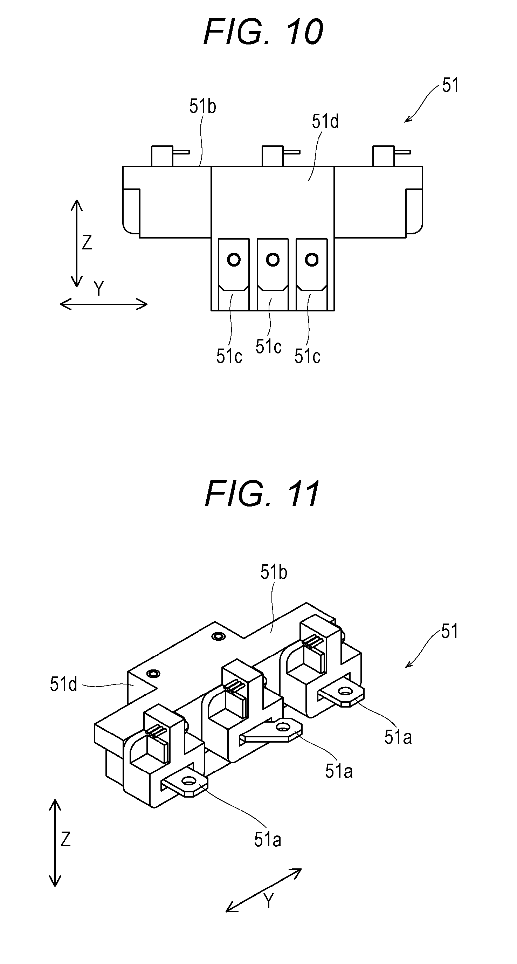

As illustrated in Figs. 10 and 11, the inverter bus-bar wiring 51 is extended along the Y direction and has a first portion 51b and a second portion 51d. The first portion 51b is provided with three inverter connectors 51a to be connected to the inverter 1. The second portion 51d is extended in the Z direction. The second portion 51d is provided with three motor connectors 51c to be connected to the motor 3 side. In addition, as illustrated in Fig. 8, the inverter bus-bar wiring 51 is disposed at the X2-direction side of the inverter 1. Further, as illustrated in Figs. 12 and 13, the second portion 51d (motor connectors 51c) of the inverter bus-bar wiring 51 extending in the Z direction is disposed at the non-load side (X2-direction side, resolver housing portion 113) of the first housing portion 11 through the first hole portion 112a.

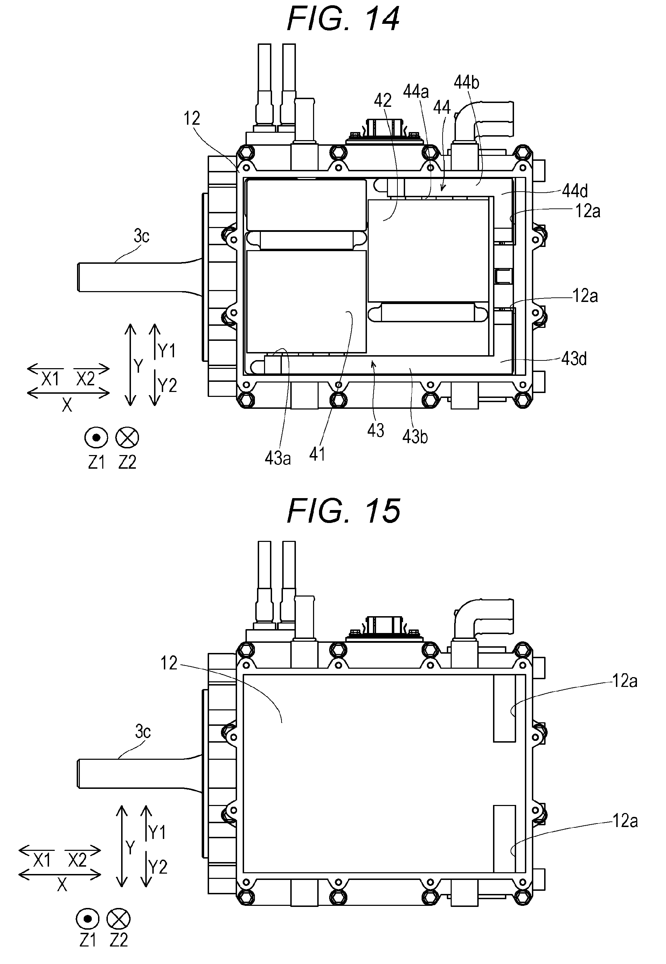

As illustrated in Figs. 14 and 15, the second housing portion 12 is provided with a high-speed winding switcher 41 and a low-speed winding switcher 42. The high-speed winding switcher 41 includes the high-speed winding switch SW1 and the diode bridge DB1 (refer to Fig. 1). The low-speed winding switcher 42 includes the low-speed winding switch SW2 and the diode bridge DB2. The high-speed winding switcher 41 is disposed at the load side (X1-direction side) of the second housing portion 12. The low-speed winding switcher 42 is disposed at the non-load side (X2-direction side) of the second housing portion 12.

In the first embodiment, a high-speed winding bus-bar wiring 43 is provided to connect the high-speed winding switcher 41 and the motor 3. In addition, a low-speed winding bus-bar wiring 44 is provided to connect the low-speed winding switcher 42 and the motor 3. Further, as illustrated in Fig. 15, the second housing portion 12 is provided with second hole portions 12a that establish a communication between the second housing portion 12 and the first housing portion 11 (inverter housing portion 112). The high-speed winding bus-bar wiring 43 and the low-speed winding bus-bar wiring 44 are configured to penetrate through the second hole portions 12a and the first hole portion 112a (refer to Fig. 9). The motor connector 43c (refer to Fig. 13) and the motor connector 44c (refer to Fig. 13) are disposed at the non-load side (X2-direction side) of the motor housing portion 111 (resolver housing portion 113). As illustrated in Fig. 15, the second hole portions 12a are disposed at the X2-direction side of the second housing portion 12, and at an end in the Y1-direction side and an end at the Y2-direction side in plan view (viewed from the Z1 direction). These second hole portions 12a are formed in an almost rectangular shape. The high-speed winding bus-bar wiring 43 and the low-speed winding bus-bar wiring 44 are examples of a "second bus-bar wiring."

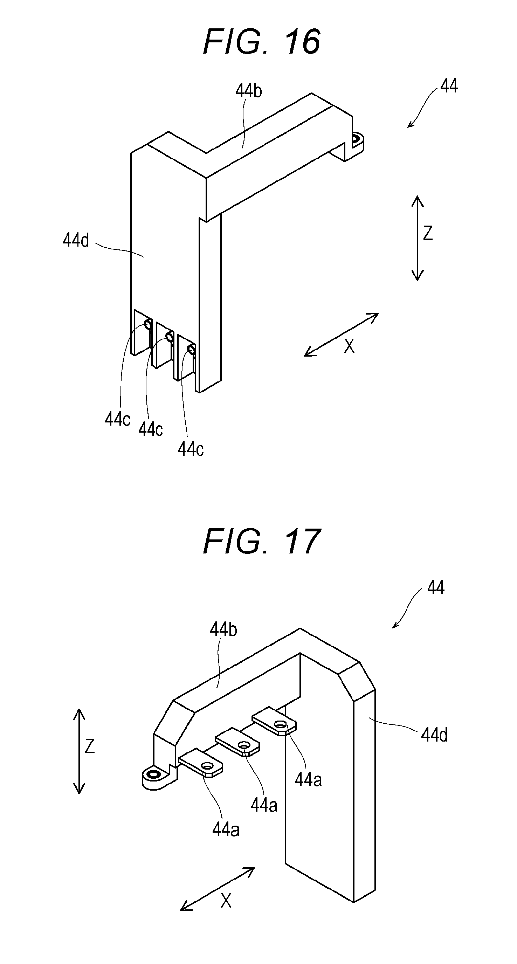

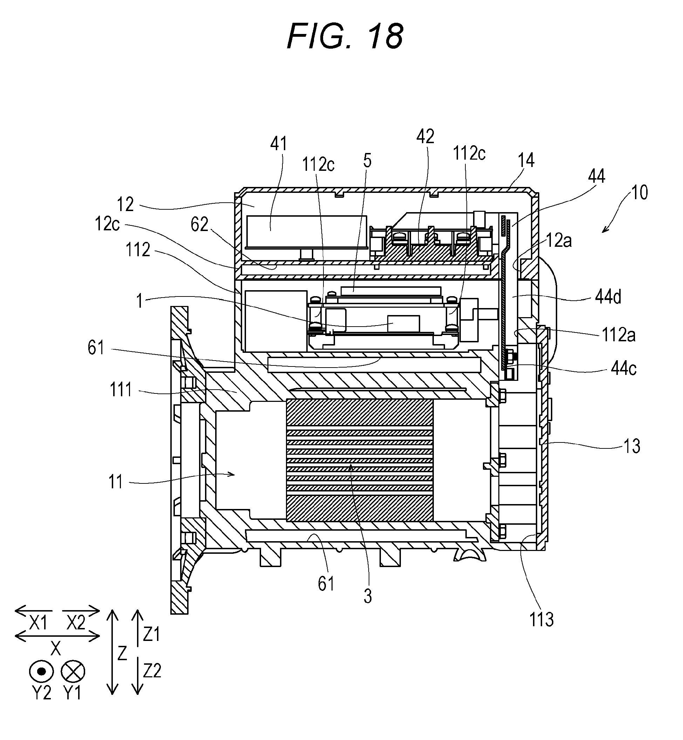

As illustrated in Figs. 16 and 17, the low-speed winding bus-bar wiring 44 is extended along the X direction. The low-speed winding bus-bar wiring 44 has a first portion 44b and a second portion 44d. The first portion 44b is provided with three switcher connectors 44a to be connected to the low-speed winding switcher 42. The second portion 44d is extended in the Z direction. The second portion 44d is provided with three motor connectors 44c to be connected to the motor 3 side. In addition, as illustrated in Fig. 14, the low-speed winding bus-bar wiring 44 is disposed at the Y1-direction side of the low-speed winding switcher 42. Further, as illustrated in Figs. 13 and 18, the second portion 44d (motor connectors 44c) of the low-speed winding bus-bar wiring 44, extending in the Z direction, is disposed at the resolver housing portion 113 at the non-load side (X2-direction side) of the first housing portion 11 through the second hole portion 12a and the first hole portion 112a.

As illustrated in Fig. 14, the high-speed winding bus-bar wiring 43, as with the low-speed winding bus-bar wiring 44, is extended along the X direction, and has a first portion 43b and a second portion 43d. The first portion 43b is provided with three switcher connectors 43a to be connected to the high-speed winding switcher 41. The second portion 43d is extended in the Z direction. The second portion 43d is provided with three motor connectors 43c (refer to Fig. 13) to be connected to the motor 3 side. In addition, the high-speed winding bus-bar wiring 43 is disposed at Y2-direction side of the high-speed winding switcher 41.
As illustrated in Fig. 13, the second portion 43d extended in the Z direction (motor connector 43c) of the high-speed winding bus-bar wiring 43 is disposed at the resolver housing portion 113 at the non-load side (X2-direction side) of the first housing portion 11 through the second hole portions 12a and the first hole portion 112a.

In the first embodiment, as illustrated in Fig. 12, the second housing portion 12 houses the winding switcher 4. The first housing portion 11 houses the motor 3 and the inverter 1. The first housing portion 11 and the second housing portion 12 are stacked in a direction approximately orthogonal (Z direction) to the axial direction of the motor 3 (X direction). That is, the first housing portion 11 and the second housing portion 12 are disposed adjacent to each other and integrally joined together. Specifically, the motor housing portion 111 for housing the motor 3, the inverter housing portion 112 for housing the inverter 1, and the second housing portion 12 for housing the winding switcher 4 are disposed (connected) in the Z1 direction in order of the motor housing portion 111, the inverter housing portion 112, and the second housing portion 12. Thus, the motor 3, the inverter 1, and the winding switcher 4 are disposed in the direction approximately orthogonal (Z1 direction) to the axial direction of the motor 3 (X direction) in order of the motor 3, the inverter 1, and the winding switcher 4.

In the first embodiment, as illustrated in Figs. 3 and 4, a surface of the inverter housing portion 112 at the second housing portion 12 side (upper surface 112b) and a surface of the second housing portion 12 at the inverter housing portion 112 side (lower surface 12d) are configured to have almost the same shape (almost rectangular shape) in plan view. In addition, the second housing portion 12 is stacked on the inverter housing portion 112 to cover the inverter housing portion 112. Specifically, the second housing portion 12 is attached to the upper side of the first housing portion 11 (in the Z1 direction) by the screw members 16 to block the opening of the first housing portion 11. Further, the second housing portion 12 has a box shape opened at the upper side (in the Z1 direction). The second housing portion 12 has a second cover portion 14 attached by the screw members 16 to cover the opening of the second housing portion 12.

In the first embodiment, as illustrated in Fig. 13, the motor connector 44c of the low-speed winding bus-bar wiring 44, the motor connector 43c of the high-speed winding bus-bar wiring 43, and the motor connector 51c of the inverter bus-bar wiring 51 are disposed in parallel to each other (in a Y direction) viewed from the axial direction at the non-load side of the motor housing portion 111 (resolver housing portion 113). Specifically, viewed from the axial direction, the motor connector 44c of the low-speed winding bus-bar wiring 44 and the motor connector 43c of the high-speed winding bus-bar wiring 43 are disposed at the Y1-direction side and Y2-direction side of the resolver housing portion 113, respectively. In addition, the motor connector 51c of the inverter bus-bar wiring 51 is disposed to be sandwiched between the motor connector 44c of the low-speed winding bus-bar wiring 44 and the motor connector 43c of the high-speed winding bus-bar wiring 43.

In the first embodiment, as illustrated in Fig. 18, a first cooling flow passage 61 configured to cool the motor 3 and the inverter 1 is provided between the motor 3 and the inverter 1 in the first housing portion 11 (between the motor housing portion 111 and the inverter housing portion 112). The first cooling flow passage 61 is configured such that a cooling liquid flows therethrough. In addition, the first cooling flow passage 61 is extended to the vicinities of the motor connector 44c of the low-speed winding bus-bar wiring 44 and the motor connector 43c of the high-speed winding bus-bar wiring 43 so as to be opposed to the motor connector 44c of the low-speed winding bus-bar wiring 44 and the motor connector 43c of the high-speed winding bus-bar wiring 43 disposed at the non-load side of the motor housing portion 111 (resolver housing portion 113) viewed from the axial direction (refer to Fig. 13). The first cooling flow passage 61 is an example of a "first cooler."

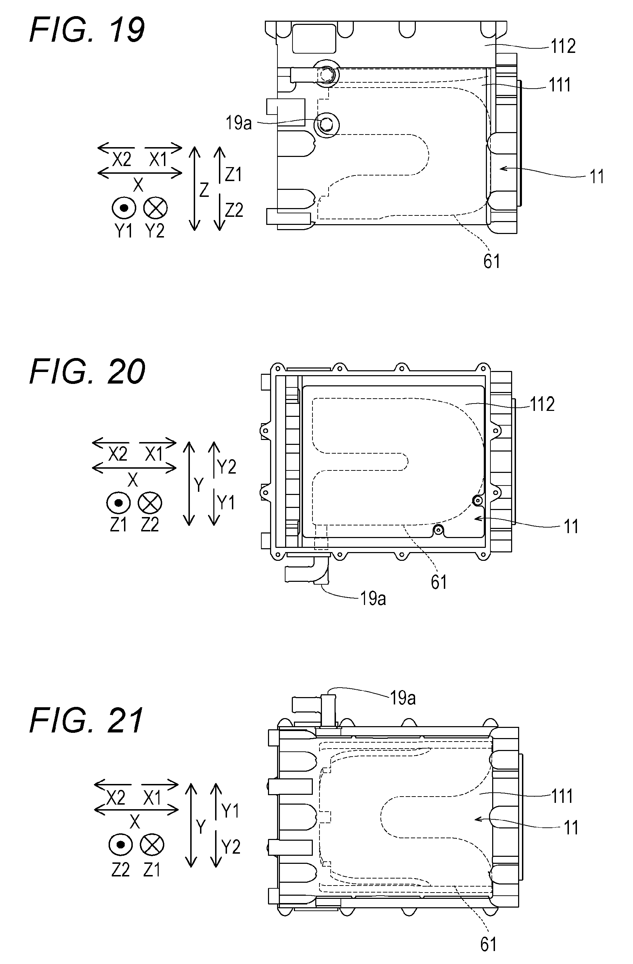

The first cooling flow passage 61 is provided within the motor housing portion 111 to surround the motor 3 circumferentially. Specifically, as illustrated in Fig. 19 (side view), Fig. 20 (top view), and Fig. 21 (bottom view), the first cooling flow passage 61 is formed to have a plurality of straight portions. These straight portions are extended within the first housing portion 11 (at the motor housing portion 111 and between the motor housing portion 111 and the inverter housing portion 112) from the vicinity of the end at the X1-direction side to the vicinity of the end at the X2-direction side in the X direction. The plurality of straight portions extended in the X direction are alternately folded in U shape and connected to each other at the end at the X1-direction side and the end at the X2-direction side. This forms a series of flow passages configured to let a cooling liquid flow from the one end to the other end of the first cooling flow passage 61.

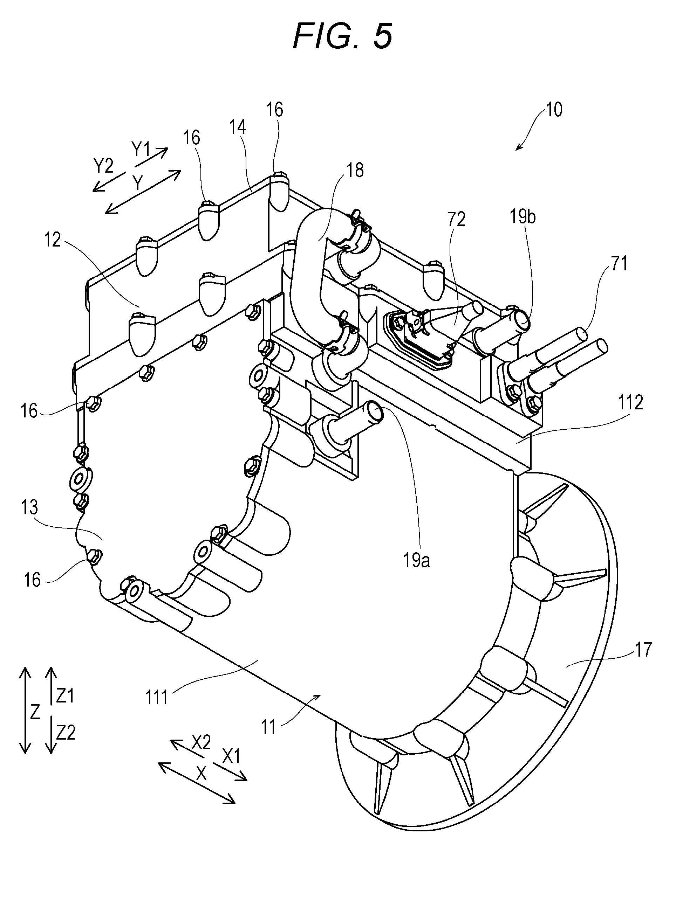

In the first embodiment, as illustrated in Fig. 18, a second cooling flow passage 62 configured to cool the winding switcher 4 is provided at a bottom portion 12c of the second housing portion 12 at the first housing portion 11 side (at the Z2-direction side). The second cooling flow passage 62 is connected to the first cooling flow passage 61. This forms a series of flow passages configured to let a cooling liquid flow from the one end of the first cooling flow passage 61 to the other end of the second cooling flow passage 62. The first cooling flow passage 61 and the second cooling flow passage 62 are connected together by a connection pipe 18 as illustrated in Figs. 4 and 5. The cooling liquid is flown in from an inlet 19a provided at the motor housing portion 111 and flown out from an outlet 19b provided at the second housing portion 12 disposed at the upper side. The second cooling flow passage 62 is an example of a "second cooler."

In the first embodiment, the second housing portion 12 for housing the winding switcher 4 is configured to be attachable/detachable to/from the first housing portion 11 together with the winding switcher 4. Even if the second housing portion 12 is detached together with the winding switcher 4, the motor 3 can be driven as a non-winding switch-type motor by connecting (short-circuiting) the low-speed drive winding 3b.

As illustrated in Figs. 4 and 5, the inverter housing portion 112 is configured such that a battery cable 71 connected to the battery unit 20 and a signal cable 72 connected to the controller 5 are mounted thereto.

According to the first embodiment, the following advantages can be obtained.

In the first embodiment, as described above, the motor 3, the inverter 1, and the winding switcher 4 are disposed in the direction approximately orthogonal to the axial direction of the motor 3, in order of the motor 3, the inverter 1, and the winding switcher 4. This makes it possible to mount the winding switcher 4 and the inverter 1 to the motor 3 without having to rotate the motor 3 around the axis. This facilitates the work of mounting the winding switcher 4 and the inverter 1, allowing an improvement in workability in mounting the winding switcher 4 and the inverter 1.

In the first embodiment, as described above, the motor drive unit 10 includes the first housing portion 11 and the second housing portion 12 for housing the winding switcher 4. The first housing portion 11 includes the motor housing portion 111 for housing the motor 3 and the inverter housing portion 112 for housing the inverter 1. The second housing portion 12 is stacked on the first housing portion 11 in the direction approximately orthogonal to the axial direction of the motor 3 in the first housing portion 11. Thus, the second housing portion 12 is disposed at the outer peripheral side (for example, the outermost side) of the direction approximately orthogonal to the axial direction of the motor 3 in the first housing portion 11. This makes it possible to easily perform maintenance of the winding switcher 4 housed in the second housing portion 12 without having to rotate the motor 3 around the axis, allowing an improvement in workability in maintenance of the winding switcher 4.

In the first embodiment, as described above, the first housing portion 11 is provided with the first hole portion 112a that establishes a communication between the inverter housing portion 112 and the motor housing portion 111. This facilitates installing of the wirings or the like from the inverter housing portion 112 to the motor housing portion 111. In addition, the wirings for connecting the inverter 1 and the motor 3 (high-speed/low-speed winding wirings) become short significantly. This decreases a space needed for the wirings, which makes it possible to reduce the motor drive unit 10 in size and weight. As a result, the motor drive unit 10 has a smaller portion producing heat and thus can be improved in reliability.

In the first embodiment, as described above, the inverter bus-bar wiring 51 is connected to the inverter 1. In addition, the motor connector 51c of the inverter bus-bar wiring 51 is disposed at the non-load side of the motor housing portion 111 through the first hole portion 112a of the inverter housing portion 112. Thus, the motor connector 51c of the inverter bus-bar wiring 51 is disposed at the non-load side of the motor housing portion 111. This can improve workability in connecting the motor connector 51c of the inverter bus-bar wiring 51 to the wirings of the motor 3 in contrast to the case where the motor connector 51c is disposed at the load side without a margin in space due to arrangement of the drive shaft and the like.

In the first embodiment, as described above, the second housing portion 12 is provided with the second hole portions 12a that establish a communication between the second housing portion 12 and the first housing portion 11. This makes it possible to easily install the wirings and the like from the second housing portion 12 to the inverter housing portion 112. In addition, the wirings for connecting the inverter 1 and the winding switcher 4 become short significantly. This decreases a space needed for the wirings, which makes it possible to reduce the motor drive unit 10 in size and weight. As a result, the motor drive unit 10 has a smaller portion producing heat and thus can be improved in reliability.

In the first embodiment, as described above, the low-speed winding bus-bar wiring 44 and the high-speed winding bus-bar wiring 43 are provided to connect the winding switcher 4 and the motor 3. The motor connector 44c of the low-speed winding bus-bar wiring 44 and the motor connector 43c of the high-speed winding bus-bar wiring 43 are disposed at the non-load side of the motor housing portion 111 through the second hole portions 12a and the first hole portion 112a. Thus, the motor connector 44c of the low-speed winding bus-bar wiring 44 and the motor connector 43c of the high-speed winding bus-bar wiring 43 are disposed at the non-load side of the motor housing portion 111. This can improve workability in connecting the low-speed winding bus-bar wiring 44 and the high-speed winding bus-bar wiring 43 to the motor 3 in contrast to the case where the motor connectors 43c and 44c are disposed at the load side without a margin in space due to arrangement of the drive shaft and the like.

In the first embodiment, as described above, the motor connector 44c of the low-speed winding bus-bar wiring 44 and the motor connector 43c of the high-speed winding bus-bar wiring 43, and the motor connector 51c of the inverter bus-bar wiring 51 are disposed in parallel to each other viewed from the axial direction. This makes it possible to perform the operation of connecting the low-speed winding bus-bar wiring 44 and the high-speed winding bus-bar wiring 43 to the motor 3 and the operation of connecting the inverter bus-bar wiring 51 to the motor 3 at the same time (in the same connection process), allowing a further improvement in workability in performing the connections.

In the first embodiment, as described above, the first cooling flow passage 61 configured to cool the motor 3 and the inverter 1 is provided between the motor 3 and the inverter 1 in the first housing portion 11. The first cooling flow passage 61 is extended to the vicinity of the low-speed winding bus-bar wiring 44 and the high-speed winding bus-bar wiring 43 so as to be opposed to the motor connector 44c of the low-speed winding bus-bar wiring 44 and the motor connector 43c of the high-speed winding bus-bar wiring 43 at the non-load side of the motor housing portion 111, when viewed from the axial direction. Thus, the cooling liquid flowing through the first cooling flow passage 61 can efficiently cool the motor connector 44c of the low-speed winding bus-bar wiring 44 and the motor connector 43c of the high-speed winding bus-bar wiring 43, preventing deterioration due to heat in the motor connector 44c and the motor connector 43c.

In the first embodiment, as described above, the second cooling flow passage 62 configured to cool the winding switcher 4 is connected to the first cooling flow passage 61. The second cooling flow passage 62 is provided on the bottom portion 12c of the second housing portion 12 at the first housing portion 11 side. This can cool the winding switcher 4 by the cooling liquid flowing through the second cooling flow passage 62, preventing the winding switcher 4 from causing deterioration and malfunction due to heat.

In the first embodiment, as described above, the controller 5 configured to control the winding switcher 4 and the inverter 1 is disposed at the inverter housing portion 112. This allows the controller 5 to be separated from the motor 3 producing relatively high feat, preventing the controller 5 from causing deterioration and malfunction due to heat produced by the motor 3.

In the first embodiment, as described above, the surface of the inverter housing portion 112 (upper surface 112b) at the second housing portion 12 side and the surface of the second housing portion 12 (lower surface 12d) at the inverter housing portion 112 side are configured to have almost the same shape in plan view. Thus, the surface of the second housing portion 12 (lower surface 12d) at the inverter housing portion 112 side can be used as a lid configured to cover the inverter housing portion 112. This eliminates the need to provide a separate lid configured to cover the inverter housing portion 112. As a result, the configuration of the motor drive unit 10 can be simplified.

In the first embodiment, as described above, the second housing portion 12 for housing the winding switcher 4 is configured to be attachable/detachable to/from the first housing portion 11 together with the winding switcher 4. Thus, the motor drive unit 10 can be configured as a motor drive unit dedicated for low-speed driving by detaching the second housing portion 12 together with the winding switcher 4 and connecting (short-circuiting) the winding 3b for low-speed driving.

### (Second embodiment)

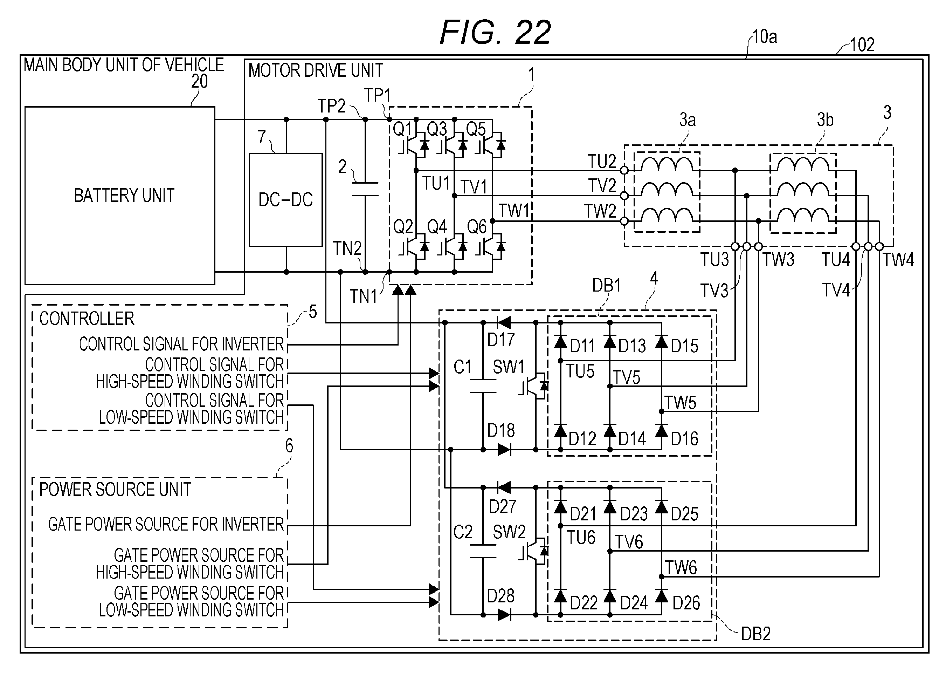

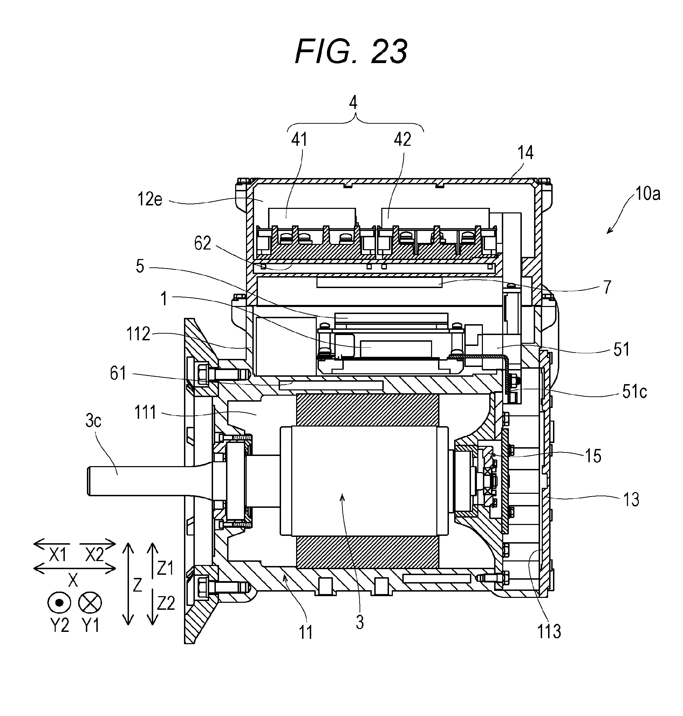

Next, referring to Figs. 22 and 23, a configuration of a vehicle 102 according to a second embodiment will be described. In the second embodiment, unlike in the first embodiment, a DC-DC converter is connected in parallel to the inverter.

As illustrated in Fig. 22, in a motor drive unit 10a of the vehicle 102, a DC-DC converter 7 is connected in parallel to the inverter 1. The DC-DC converter 7 has the function of converting a high voltage into a low voltage and outputting the same (that is, the function of subjecting a direct-current voltage to voltage conversion). The DC-DC converter 7 also has a converter module including a semiconductor element (not illustrated) and a printed wiring substrate (not illustrated). The motor drive unit 10a is an example of a "motor driving apparatus."

As illustrated in Fig. 23, the DC-DC converter 7 is disposed between the winding switcher 4 and the inverter 1 in the motor drive unit 10a. Specifically, the DC-DC converter 7 is disposed at a second housing portion 12e for housing the winding switcher 4 so as to be opposed to the winding switcher 4 via the second cooling flow passage 62. That is, the DC-DC converter 7 is disposed at the lower side of the second cooling flow passage 62. Thus, the DC-DC converter 7 is cooled by a cooling liquid flowing through the second cooling flow passage 62. Other configurations and advantages of the second embodiment are the same as those of the first embodiment.

The embodiments disclosed herein are examples in all respects and should not be considered to be limitative. The scope of the present disclosure is indicated not by the foregoing descriptions of the embodiments but by the scope of the claims. Further, the scope of the present disclosure includes all modifications in the sense equal to the scope of the claims and within the scope of the claims.

For example, in the examples of the first and second embodiments, the motor drive unit is mounted in the vehicle. Alternatively, the motor drive unit may be mounted in a device other than a vehicle.

In the examples of the first and second embodiments, the inverter housing portion for housing the inverter and the second housing portion for housing the winding switcher are stacked and thereby the winding switcher and the inverter are disposed along the direction approximately orthogonal to the motor axis. Alternatively, the winding switcher may be disposed at the inverter housing portion. In this configuration, the winding switcher and the inverter are disposed in the direction approximately orthogonal to the motor axis, within the inverter housing portion.

In the examples of the first and second embodiments, the winding switcher is connected to the low-speed winding bus-bar wiring and the high-speed winding bus-bar wiring. Alternatively, the winding switcher may be connected to cable-like wirings, for example.

In the examples of the first and second embodiments, the inverter bus-bar wiring is connected to the inverter. Alternatively, the inverter may be connected to cable-like wirings, for example.

In the examples of the first and second embodiments, the low-speed winding bus-bar wiring, the high-speed winding bus-bar wiring, and the motor connector of the inverter bus-bar wiring are disposed at the resolver housing portion so as to be adjacent to one another in the horizontal direction. Alternatively, the low-speed winding bus-bar wiring, the high-speed winding bus-bar wiring, and the motor connector of the inverter bus-bar wiring may be disposed so as not to be adjacent to one another.

In the examples of the first and second embodiments, the motor, the winding switcher, and the inverter are cooled by a cooling liquid flowing through the first cooling flow passage and the second cooling flow passage. Alternatively, the motor, the winding switcher, and the inverter may be cooled by a cooling member not using a cooling liquid (for example, an air-cooling device or a cooling element).

In the examples of the first and second embodiments, the first cooling flow passage configured to cool the motor and the inverter and the second cooling flow passage configured to cool the winding switcher are connected together. Alternatively, the first cooling flow passage and the second cooling flow passage may not be connected together. The first cooling flow passage and the second cooling flow passage may cool separately the motor and the inverter, and the winding switcher.

In the examples of the first and second embodiments, the cooling liquid is flown from the lower side (motor housing portion) to the upper side (second housing portion). Alternatively, the cooling liquid may be flown from the upper side (second housing portion) to the lower side (motor housing portion).

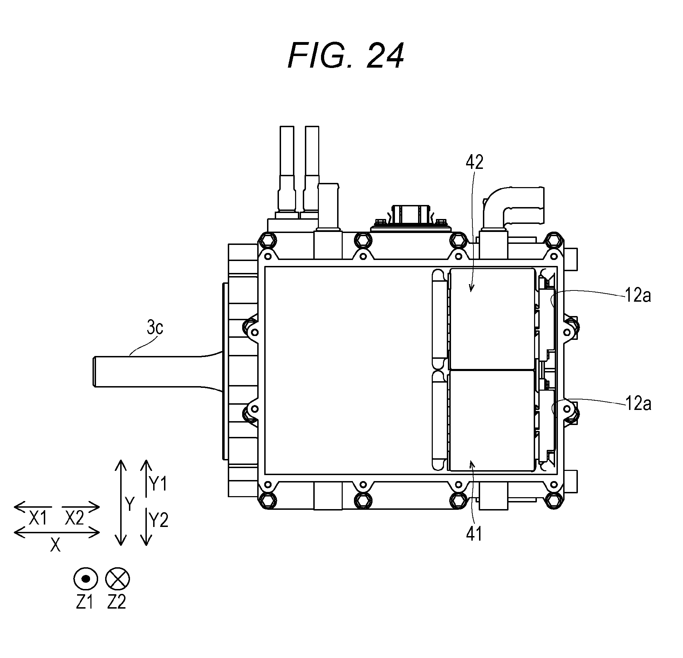

In the examples of the first and second embodiments, the high-speed winding switcher 41 and the low-speed winding switcher 42 are shifted from each other in the X direction (refer to Fig. 14). Alternatively, as illustrated in the modification example of Fig. 24, the high-speed winding switcher 41 and the low-speed winding switcher 42 may be disposed adjacent to each other in the Y direction. Thus, the high-speed winding switcher 41 and the low-speed winding switcher 42 can be disposed at the second hole portion 12a side (X2-direction side), shortening the lengths of the high-speed winding bus-bar wiring and the low-speed winding bus-bar wiring along the X direction.

In the example of the second embodiment, switching takes place between the high-speed driving winding and the low-speed driving winding. Alternatively, switching may take place between windings other than the high-speed driving winding and the low-speed driving winding, for example, a low-torque winding and a high-torque winding.

In the example of the second embodiment, the DC-DC converter is disposed at the second housing portion for housing the winding switcher, so as to be opposed to the winding switcher via the cooling flow passage. Alternatively, the DC-DC converter may be disposed at the second housing portion so as to be adjacent to the winding switcher. Still alternatively, the DC-DC converter may be disposed at a place other than the second housing portion (for example, within the inverter housing portion).

The embodiment in the present disclosure may be first to twelfth motor driving apparatus and the first vehicle as described below. The first motor driving apparatus includes: a motor including a first winding and a second winding; a winding switcher configured to switch between connection states of the first winding and the second winding of the motor; and a power converter connected to the motor, wherein the motor, the power converter, and the winding switcher are stacked in a direction approximately orthogonal to an axial direction of the motor in order of the motor, the power converter, and the winding switcher.

The second motor driving apparatus is configured such that the first motor driving apparatus further includes: a first housing portion that includes a motor housing portion for housing the motor and a power converter housing portion for housing the power converter; and a second housing portion that is stacked on the first housing portion in the direction approximately orthogonal to the axial direction of the motor and is configured to house the winding switcher.

The third motor driving apparatus is configured such that, in the second motor driving apparatus, the first housing portion is provided with a first hole portion that connects the power converter housing portion and the motor housing portion.

The fourth motor driving apparatus is configured such that the third motor driving apparatus further includes a first bus-bar wiring that connects the power converter and the motor, wherein the first bus-bar wiring penetrates through the first hole portion, and a motor connector of the first bus-bar wiring is disposed at a non-load side of the motor housing portion.

The fifth motor driving apparatus is configured such that, in any of the second to fourth motor driving apparatus, the second housing portion is provided with a second hole portion that connects the second housing portion and the first housing portion.

The sixth motor driving apparatus is configured such that the fifth motor driving apparatus further includes a second bus-bar wiring that connects the winding switcher and the motor, wherein the first housing portion is provided with a first hole portion that connects the power converter housing portion and the motor housing portion, the second bus-bar wiring penetrates through the second hole portion and the first hole portion, and a motor connector of the second bus-bar wiring is disposed at the non-load side of the motor housing portion.

The seventh motor driving apparatus is configured such that the sixth motor driving apparatus further includes a first bus-bar wiring that connects the power converter and the motor, wherein the motor connector of the first bus-bar wiring and the motor connector of the second bus-bar wiring are aligned in the horizontal direction viewed from the axial direction.

The eighth motor driving apparatus is configured such that any of the second to seventh motor driving apparatus further includes a first cooler that is provided at least between the motor and the power converter in the first housing portion and configured to cool the motor and the power converter; and a second bus-bar wiring that connects the winding switcher and the motor, wherein the first cooler is extended to the vicinity of the second bus-bar wiring so as to be opposed to the motor connector of the second bus-bar wiring disposed at the non-load side of the motor housing portion viewed from the axial direction.

The ninth motor driving apparatus is configured such that the eighth motor driving apparatus further includes a second cooler that is connected to the first cooler, provided on a bottom portion of the second housing portion at the first housing portion side, and configured to cool the winding switcher.

The tenth motor driving apparatus is configured such that any of the second to ninth motor driving apparatus further includes a controller that is disposed at the power converter housing portion and configured to control the power converter and the winding switcher.

The eleventh motor driving apparatus is configured such that, in any of the second to tenth motor driving apparatus, at least a surface of the power converter housing portion at the second housing portion side and a surface of the second housing portion at the power converter housing portion are configured to have almost the same shape in plan view.

The twelfth motor driving apparatus is configured such that, in any of the first to eleventh motor driving apparatus, the first winding and the second winding include a high-speed driving winding and a low-speed driving winding, respectively.

The thirteenth motor driving apparatus is configured such that, in any of the second to twelfth motor driving apparatus, the second housing portion for housing the winding switcher is configured to be attachable/detachable to/from the first housing portion together with the winding switcher.

The first vehicle includes a vehicle main body unit and a motor drive unit that is provided within the vehicle main body unit, wherein the motor drive unit includes: a motor including a first winding and a second winding; a winding switcher configured to switch between connection states of the first winding and the second winding of the motor; and a power converter connected to the motor, and the motor, the power converter, and the winding switcher are stacked in a direction approximately orthogonal to an axial direction of the motor, in order of the motor, the power converter, and the winding switcher.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A motor driving apparatus (10, 10a) comprising:
a motor (3) including a first winding (3a) and a second winding (3a, 3b);
a winding switcher (4) configured to switch between connection states of the first winding and the second winding of the motor; and
a power converter (1) connected to the motor, wherein
the motor, the power converter, and the winding switcher are disposed in a direction approximately orthogonal to an axial direction of the motor in order of the motor, the power converter, and the winding switcher.

2. The motor driving apparatus according to Claim 1, further comprising:
a first housing portion (11) that includes a motor housing portion (111) for housing the motor and a power converter housing portion (112) for housing the power converter; and
a second housing portion (12) that is stacked on the first housing portion in the direction approximately orthogonal to the axial direction of the motor of the first housing portion and is configured to house the winding switcher.

3. The motor driving apparatus according to Claim 2, wherein the first housing portion is provided with a first hole portion (112a) that establishes a communication between the power converter housing portion and the motor housing portion.

4. The motor driving apparatus according to Claim 3, further comprising a first bus-bar wiring (51) that connects the power converter and the motor, wherein
the first bus-bar wiring penetrates through the first hole portion, and
a motor connector (51c) of the first bus-bar wiring is disposed at a non-load side of the motor housing portion.

5. The motor driving apparatus according to any one of Claims 2 to 4, wherein the second housing portion is provided with a second hole portion (12a) that establishes a communication between the second housing portion and the first housing portion.

6. The motor driving apparatus according to Claim 5, further comprising a second bus-bar wiring (44) that connects the winding switcher and the motor, wherein
the first housing portion is provided with a first hole portion (112a) that establishes a communication between the power converter housing portion and the motor housing portion,
the second bus-bar wiring penetrates through the second hole portion and the first hole portion, and
a motor connector (44c) of the second bus-bar wiring is disposed at the non-load side of the motor housing portion.

7. The motor driving apparatus according to Claim 6, further comprising a first bus-bar wiring (51) that connects the power converter and the motor, wherein
the motor connector (51c) of the first bus-bar wiring and the motor connector (44c) of the second bus-bar wiring are aligned in the horizontal direction viewed from the axial direction.

8. The motor driving apparatus according to any one of Claims 2 to 7, further comprising:
a first cooler (61) that is provided at least between the motor and the power converter in the first housing portion and configured to cool the motor and the power converter; and
a second bus-bar wiring (44) that connects the winding switcher and the motor, wherein
the first cooler is extended to the vicinity of the second bus-bar wiring so as to be opposed to the motor connector (44c) of the second bus-bar wiring disposed at the non-load side of the motor housing portion viewed from the axial direction.

9. The motor driving apparatus according to Claim 8, further comprising a second cooler (62) that is connected to the first cooler, provided on a bottom portion of the second housing portion at the first housing portion side, and configured to cool the winding switcher.

10. The motor driving apparatus according to any one of Claims 2 to 9, further comprising a controller (5) that is disposed at the power converter housing portion and configured to control the power converter and the winding switcher.

11. The motor driving apparatus according to any one of Claims 2 to 10, wherein at least a surface (112b) of the power converter housing portion at the second housing portion side and a surface (12d) of the second housing portion at the power converter housing portion side are configured to have almost the same shape in plan view.

12. The motor driving apparatus according to any one of Claims 2 to 11, wherein the second housing portion for housing the winding switcher is configured to be attachable/detachable to/from the first housing portion together with the winding switcher.

13. The motor driving apparatus according to any one of Claims 1 to 12, wherein the first winding and the second winding include a high-speed driving winding and a low-speed driving winding, respectively.

14. The motor driving apparatus according to Claim 9, further comprising a DC-DC converter (7) that is connected in parallel to the power converter and configured to subject a direct-current voltage to voltage conversion, wherein
the DC-DC converter is disposed at the second housing portion so as to be opposed to the winding switcher via the second cooler.

15. A vehicle (100) comprising:
a vehicle main body unit (101); and
the motor driving apparatus according to Claim 1 that is provided within the vehicle main body unit.
